# EUROPEAN PATENT APPLICATION

(11) **EP 2 278 203 A1**
(43) Date of publication of application: **26.01.2011**
(21) Application number: 10162450.0
(22) Date of filing: 10.05.2010
(51) Int. Cl.: F16L 3/23, F16L 3/08, H02G 3/02

(54) **Integrated electrical cable support**

(30) Priority: 24.07.2009 US 228456 P; 30.04.2010 US 771740
(71) Applicant: General Electric Company, Schenectady, NY 12345 (US)
(72) Inventor: Woelke, Sarah Ann, Cincinnati, OH 45215 (US); Czachor, Robert Paul, Cincinnati, OH 45215 (US); Wormuth, Jeffrey Blake, Cincinnati, OH 45215 (US)
(74) Representative: Gray, Thomas

(57) **Abstract**

An integrated cable support (70), the support (70) comprising a grommet portion (78,74) for enclosing at least one first elongated cable (82) and a bracket portion (71) for securing at least one second elongated cable (81) in spaced and substantially fixed relation to said at least one first elongated cable (82). The at least one first elongated cable (82) and the at least one second elongated cable (81) are in a non-parallel orientation.

## Description

### BACKGROUND OF THE INVENTION

The technology described herein relates generally to electrical devices, particularly to electrical devices for supporting and securing electrical cables, and more particularly, to electrical cable supports.

Many gas turbine engine assemblies include a fan assembly that is mounted upstream from a core gas turbine engine. During operation, a portion of the airflow discharged from the fan assembly is channeled downstream to the core gas turbine engine wherein the airflow is further compressed. The compressed airflow is then channeled into a combustor, mixed with fuel, and ignited to generate hot combustion gases. The combustion gases are then channeled to a turbine, which extracts energy from the combustion gases for powering the compressor, as well as producing useful work to propel an aircraft in flight. The other portion of the airflow discharged from the fan assembly exits the engine through a fan stream nozzle.

To facilitate channeling the airflow into the fan assembly, some known gas turbine engine assemblies includes an inlet guide vane assembly that is used to direct the air in a desirable orientation toward the fan blades. Inlet guide vanes (IVGs) may be provided in either a fixed orientation or may be constructed in a variable inlet guide vane configuration. Variable inlet guide vanes (VIGVs) may be adjusted for various operating conditions and environments, often by pivoting the guide vanes about an axis, to achieve the desired airflow characteristics leading into the fan assembly. In addition to turning the fan airflow, the inlet guide vane assembly may also provide structural stiffness to the fan frame. More specifically, inlet guide vane assemblies generally include a plurality of inlet guide vanes that are coupled to the fan frame.

Inlet guide vane assemblies, along with other structural elements of aircraft and aircraft engines, such as struts, may be susceptible of forming ice accumulation under certain operating and environmental conditions. Ice accumulation on such structures, besides adding weight to the structures, often has a detrimental effect on performance through alteration of the surface texture and structural shape of the element undergoing ice accumulation.

Various approaches to addressing ice accumulation have been developed, including the use of electrically powered heater elements on guide vanes, struts, and other structural elements. Such heater elements require electrical cables to deliver the power from the power source to the elements. Depending upon the power distribution and control scheme, a plurality of cables may be required so that power may be independently delivered to individual elements or selected groups of elements. Such cables require retention and support to maintain them in position and to protect them from wear and damage. There remains a need for improved electrical devices for supporting and securing electrical cables.

### BRIEF SUMMARY OF THE INVENTION

In one aspect, an integrated cable support, the support comprising a grommet portion for enclosing at least one first elongated cable and a bracket portion for securing at least one second elongated cable in spaced and substantially fixed relation to said at least one first elongated cable. The at least one first elongated cable and the at least one second elongated cable are in a non-parallel orientation.

### BRIEF DESCRIPTION OF THE DRAWINGS

There follows a detailed description of embodiments of the invention by way of example only with reference to the accompanying drawings, in which:
Figure 1 is a cross-sectional illustration of an exemplary gas turbine engine assembly;
Figure 2 is a perspective view of a forward fan frame and an exemplary electrical cable shroud suitable for use in the gas turbine engine assembly shown in Figure 1;
Figure 3 is a perspective view of the cable shroud of Figure 2;
Figure 4 is an elevational partial sectional view taken along lines 4-4 of Figure 3, illustrating the relationship of the cable shroud to the fan frame and an exemplary electrical cable support and grommet;
Figure 5 is a perspective view of the integrated cable support and grommet shown in Figure 4; and
Figure 6 is an elevational view of the front side of the integrated cable support and grommet of Figure 5;
Figure 7 is an elevational view of the rear side of the integrated cable support and grommet of Figure 5; and
Figures 8-10 are views analogous to Figures 5-7 of another embodiment of an integrated cable support and grommet.

### DETAILED DESCRIPTION OF THE INVENTION

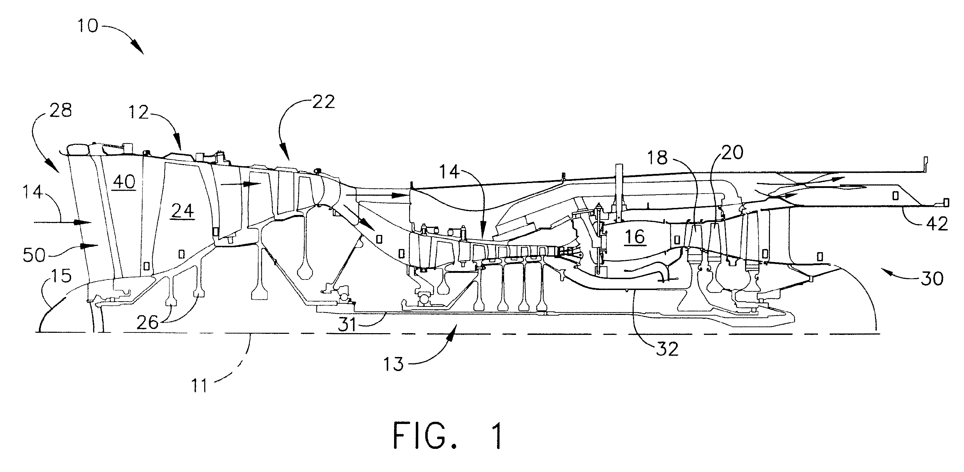

Figure 1 is a cross-sectional schematic illustration of an exemplary gas turbine engine assembly 10 having a longitudinal axis 11. Gas turbine engine assembly 10 includes a fan assembly 12 and a core gas turbine engine 13. Core gas turbine engine 13 includes a high pressure compressor 14, a combustor 16, and a high pressure turbine 18. In the exemplary embodiment, gas turbine engine assembly 10 also includes a low pressure turbine 20, and a multi-stage booster compressor 22.

Fan assembly 12 includes an array of fan blades 24 extending radially outward from a rotor disk 26. Gas turbine engine assembly 10 has an intake or inlet side 28 and an exhaust side 30. Fan assembly 12, booster 22, and turbine 20 are coupled together by a first rotor shaft 31, and compressor 14 and turbine 18 are coupled together by a second rotor shaft 32.

In operation, air flows through fan assembly 12 and booster 22. The compressed air that is discharged from booster 22 is channeled through compressor 14 wherein the airflow is further compressed and delivered to combustor 16. Hot products of combustion (not shown in Figure 1) from combustor 16 are utilized to drive turbines 18 and 20, and turbine 20 is utilized to drive fan assembly 12 and booster 22 by way of shaft 31. Gas turbine engine assembly 10 is operable at a range of operating conditions between design operating conditions and off-design operating conditions. A plurality of inlet guide vanes 40 that typically extend substantially radially, between a radially-outer mounting flange and a radially-inner mounting flange, and are circumferentially-spaced around inlet 28, guide incoming airflow 14 into the fan assembly 12. Inlet guide vanes 40 serve to turn the airflow upstream from rotating blades such as fan blades 24 for aerodynamic purposes to achieve the desired airflow characteristics into and through the fan assembly 12 under various operating conditions. Guide vanes 40 are secured in place by suitable mounting features such as inner and outer mountings, respectively. Mounting features may provide for adjustment of the orientation of guide vane 40 on a one-time or continuous basis, or may maintain it in a fixed position relative to the gas turbine engine 10. Outlet guide vanes (shown but not numbered in Figure 1) and other structures may provided downstream of the fan blades 24 for structural or aerodynamic purposes.

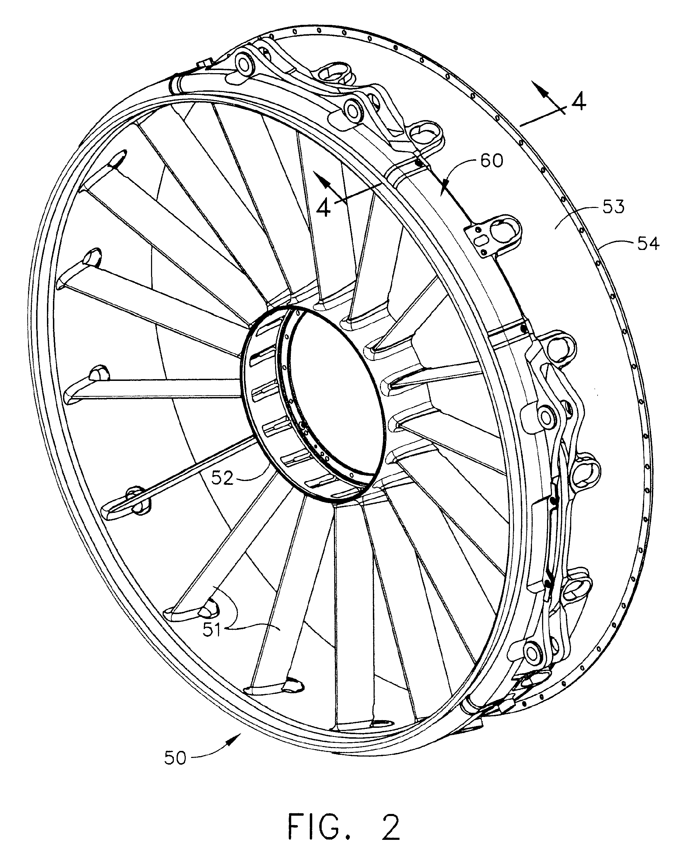

Figure 2 is a perspective view of a forward fan frame 50 and an exemplary electrical cable shroud 60 suitable for use in the gas turbine engine assembly shown in Figure 1. Forward fan frame 50 includes a plurality of struts 51 which extend between hub 52 and outer casing 53. Rear flange 54 is used to secure forward fan frame 50 to the fan case of the gas turbine engine 10.

Struts 51 include electrical heater elements (not shown) which require electrical power supplied through electrical cables from a suitable source (not shown). Heater elements are suitably sized and shaped, and configured to deliver sufficient heating value, to provide the desired anti-ice-accumulation benefit to struts 61 and/or other components under various operating conditions. Also shown in Figure 2 is the shroud 60, which will be described hereafter.

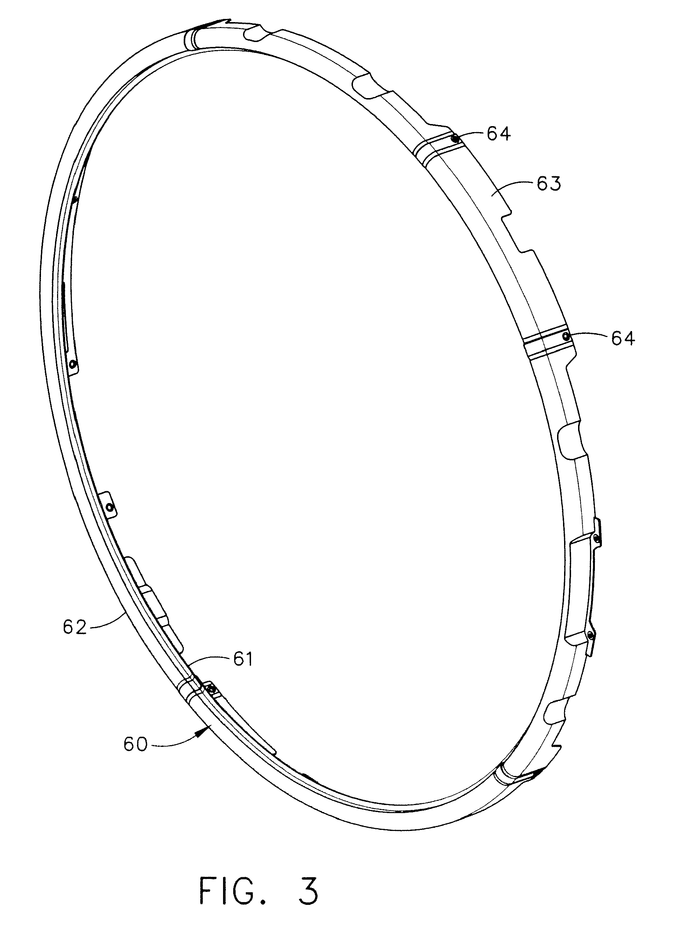

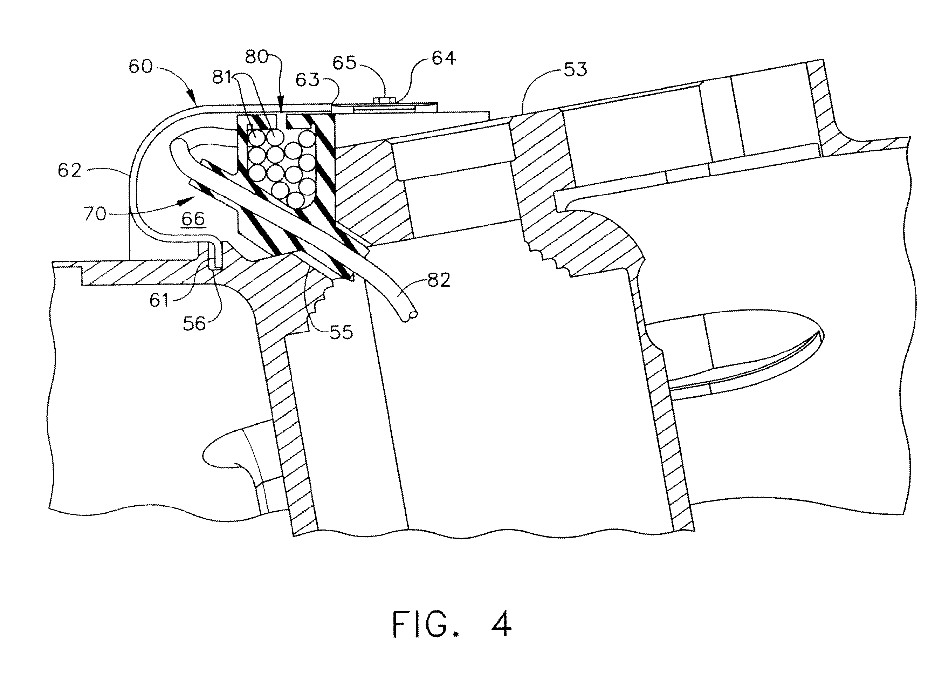

Figures 3 and 4 illustrate in greater detail the elements of and configuration of shroud 60. As shown in Figure 3, the shroud 60 is generally annular in shape and includes an inwardly extending tab extension 61, a forward portion 62, an outer portion 63, and apertures 64 suitably sized and spaced to accommodate fasteners 65 (shown in Figure 4) to secure the shroud 60 to the fan frame 50. Shroud 60 in the embodiment shown in Figures 3 and 4 forms a complete annulus or ring, and may be unitarily formed from a single piece of material or may be formed in 2 or more segments joined together before, after, or during installation on the fan frame 50.

Individual guide vanes or struts, or groups of guide vanes or struts under common control, may be energized in various patterns or sequences as desired. The respective time periods for energization and de-energization may also be determined as necessary to obtain the desired performance. Such an operating scheme may also be called a "duty cycle" and may be measured in terms of time on in comparison with time off and/or in terms of the periodic nature of the cycle (interval between repetitive events). Such control may require that each of the heater elements be individually fed electrical power via electrical cables from a suitable power source so they can be operated in the desired manner.

Figure 4 also illustrates in greater detail the geometry of the shroud 60. Shroud 60 has a generally J-shaped cross section, with the longest side of the J forming the outer surface (outer portion 63) of the annulus and the shorter leg forming the inner surface of the annulus. The shorter leg of the J-shaped cross section turns inwardly and terminates in tab extension 61, which serves to secure the shroud to fan frame 50 via an annular groove 56 without the need for fasteners. This is particularly advantageous where space and access to the vicinity of the tab extension 61 are limited. The round portion of the J-shaped cross section forms forward portion 62 which defines an internal space 66 to accommodate electrical components such as wires, cables, connectors, brackets, and grommets.

The outer portion 63 is secured to the outer casing 53 of the fan frame 50 via fasteners 65 through apertures 64 in the outer portion 63, and the shroud 60 is preferably sized and shaped so as to provide a biasing force against the bottom of annular groove 56 and the fastener 65 to achieve a pre-loaded condition. The biasing force and pre-load depend upon such factors as shroud geometry and materials, and a comparatively small pre-load angle may be selected to aid in generating the biasing force upon completed installation. A pre-load angle such as 1 to 3 degrees, for example, could be specified to provide the desired degree of compression force upon completed installation. This helps to ensure that the shroud 60 is secured within the groove 56 under a variety of conditions. Fabrication of the shroud 60 in multiple segments may prove useful in terms of ease of installation of the tab extension 61 into annular groove 56.

Also shown in Figure 4 is integrated cable support 70, which supports and secures cable bundle 80, comprising a plurality of electrical cables 81, and an individual cable 82, in spaced non-parallel relation to one another. Integrated cable support 70 is located in, and protects cable 82 as it passes through, an aperture 55 in the fan frame 50. Cable bundle 80, and cables 81 and 82, may provide any suitable electrical power or communication transmission to components of gas turbine engine 10. In the embodiment shown, they are configured to provide electrical power to electric heater mats (not shown) on struts 51 to provide anti-icing and de-icing capabilities. Cables 81 may be loose or bundled, wrapped, or enclosed in a conduit or tray as desired. In the embodiment shown, cable 82 joins into or branches from cables 81 at a location outside of or beyond cable support 70 and may be part of a cable bundle 80 passing through another cable support 70. Cables 81 and 82 communicate with and/or are connected with exterior engine components which supply or accept electrical power or signals to or from other components which connect with cables such as cable 82 which passes through the integrated cable support 70.

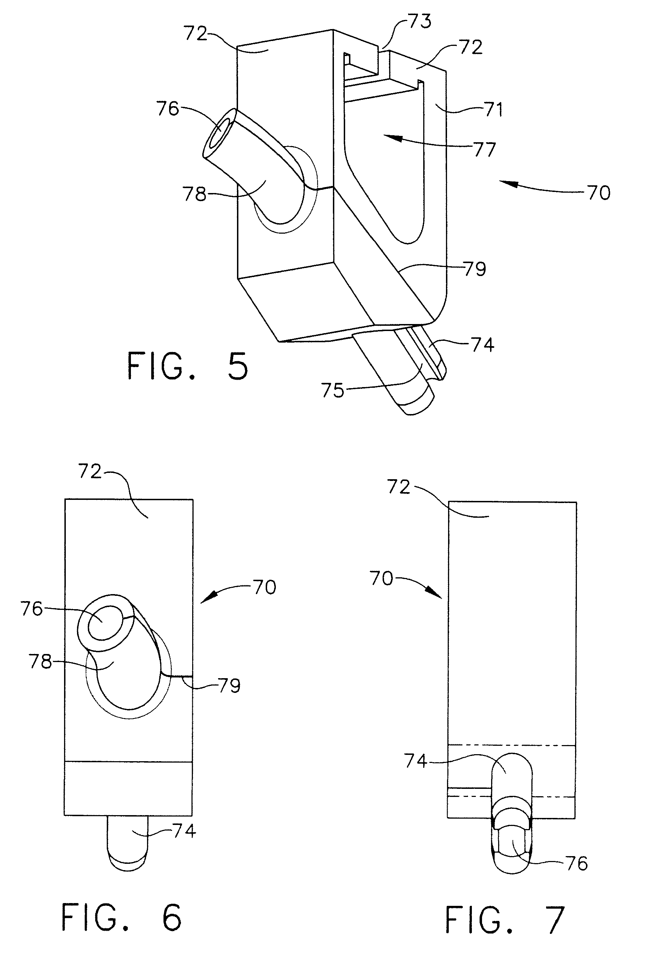

The integrated cable support 70 (hereinafter "cable support 70") is illustrated in greater detail in Figures 5-7. Cable support 70 includes an upper bracket portion 71 and a lower grommet portion formed by upper and lower extensions 78 and 74, respectively.

The upper bracket portion 71 includes a top portion 72 formed in the embodiment shown by a pair of upper arms separated by a slot 73 and forms a nearly complete ring around passage 77, through which cable bundle 80 passes. Slot 73 is optional but provides access to the passage 77 to aid in the removal or replacement of cables and/or cable supports without having to pull the cable bundle 80 lengthwise through the passage 77. Top portion 72 may also optionally include grooves as shown to retain edges of a cable tray or conduit, if desired.

The lower grommet portion includes an aperture 76 extending therethrough for passage of electrical cable 82 as shown in Figure 4. The lower grommet portion may include a slit 79 which extends through the grommet material to the aperture 76 to permit exterior access to the aperture 76 for ease of installation and/or replacement of the cable 82, particularly in situations where cable 82 includes connectors larger than aperture 76 at either or both ends. In the embodiment shown, slot 75 forms an enlarged portion of and communicates with slit 79 in the lower extension 74. Slot 75 may provide additional clearance for cable 82 and allow additional flexibility in the positioning of cable 82, allowing directional deviations from the main axial direction defined by aperture 76.

In the embodiment shown in Figures 5-7, the upper extension 78 is curved in order to provide support as well as strain relief to the cable 82 when a departure from the angle of the main portion of the aperture 76 is required. Such curvature may also in certain circumstances be desirable for the lower extension 74 in addition to or instead of the curvature of the upper extension 78.

Shroud 60 and integrated cable support 70 may be sized, shaped, and configured such as shown in Figure 4 to provide complementary interaction and enhanced protection and securement to the electrical components housed therein. For example, the shroud 60 may abut the upper surface of the integrated cable support 70 to obstruct the slit or gap 73 and ensure the cables 81 do not escape from the hole 77 in the cable support 70. The shroud 60 may also exert a downward compression force on the upper portion of the cable support 70 to maintain the lower portion (which includes lower extension 74) in contact with the aperture 55 in fan frame 50. Additionally, the cable support 70 may provide a damping feature to the shroud 60 to minimize stress due to vibratory loads under operating conditions.

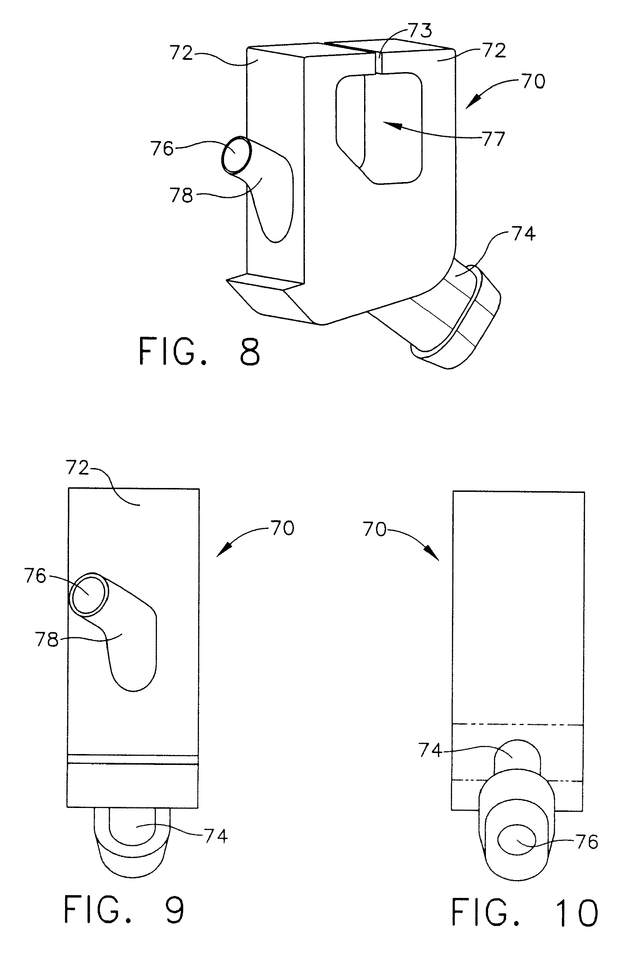

Figures 8-10 depict another embodiment of a cable support 70 analogous to the embodiment shown in Figures 5-7. In this embodiment, there is no slit 79 or slot 75. However, the lower extension 74 includes an outwardly extending ring which may engage the inner surface of aperture 55 to provide a barb-like feature with additional security and retention of the cable support 70 in the installed position. The lower portion of the cable support 70 is also slightly larger and shaped to provide greater contact area with the correspondingly-shaped surfaces of the outer casing 53.

The shroud and integrated cable support may be fabricated from any suitable materials using any suitable fabrication methods as are known in the art and suitable for the intended configuration and operating environment. For example, the shroud may be fabricated from composite materials having the desired characteristics, such as a fiberglass prepreg composite hand lay-up, and may include metal mesh for rigidity and shielding against electrical interference. The integrated cable support may be fabricated from any suitable materials, including elastomeric materials such as fluorosilicones and/or silicone, with or without internal or external reinforcement such as fiberglass weave. One such material is AMS-R-25988, a fluorosilicone material which provides for desired temperature properties as well as resistance to degradation from a variety of fluids commonly used in aerospace environments.

While much of the discussion has focused on an aviation gas turbine engine as the context for integration of the guide vane and bifurcation, it is foreseeable that such geometries and integrations may be suitable for use in other environments wherein a stationary guide vane and bifurcation are located downstream from rotating turbomachinery, such as wind or steam turbines.

For completeness, various aspects of the invention are now set out in the following numbered clauses:
1. An integrated cable support, said support comprising:
   a grommet portion for enclosing at least one first elongated cable; and
   a bracket portion for securing at least one second elongated cable in spaced and substantially fixed relation to said at least one first elongated cable;
   wherein said at least one first elongated cable and said at least one second elongated cable are in a non-parallel orientation.
2. A support in accordance with clause 1, wherein said cable is an electrical cable.
3. A support in accordance with clause 1, wherein said grommet portion includes a securement feature for securing said support to a structure.
4. A support in accordance with clause 1, wherein said at least one first elongated cable and said at least one second elongated cable are in a perpendicular relationship.
5. A support in accordance with clause 1, wherein said grommet portion substantially encircles said at least one first elongated cable.
6. A support in accordance with clause 1, wherein said bracket portion substantially encircles said at least one second elongated cable.
7. A support in accordance with clause 1, wherein said grommet portion includes a central aperture and a slit extending outwardly from said aperture to an outer surface of said grommet portion.
8. A support in accordance with clause 1, wherein said grommet portion includes at least one extension such that said extension extends outwardly beyond said bracket portion.
9. A support in accordance with clause 1, wherein said grommet portion is formed from an elastomeric material.
10. A support in accordance with clause 1, wherein said bracket portion encloses cable bundle comprising a plurality of second elongated cables and said at least one elongated cable branches from said cable bundle beyond said support.
11. An integrated cable support, said support comprising:
   a grommet portion for enclosing at least one first elongated cable; and
   a bracket portion for securing a bundle of second elongated cables as a unit in spaced and substantially fixed relation to said at least one first elongated cable;
   wherein said at least one first elongated cable branches from said bundle of second elongated cables and enters and exits from said cable support at angles not parallel to a direction defined by said bundle.
12. A support in accordance with clause 11, wherein said cable is an electrical cable.
13. A support in accordance with clause 11, wherein said grommet portion includes a securement feature for securing said support to a structure.
14. A support in accordance with clause 11, wherein said at least one first elongated cable and said bundle of second elongated cables are in a perpendicular relationship.
15. A support in accordance with clause 11, wherein said grommet portion substantially encircles said at least one first elongated cable.
16. A support in accordance with clause 11, wherein said bracket portion substantially encircles said bundle of second elongated cables.
17. A support in accordance with clause 11, wherein said grommet portion includes a central aperture and a slit extending outwardly from said aperture to an outer surface of said grommet portion.
18. A support in accordance with clause 11, wherein said grommet portion includes at least one extension such that said extension extends outwardly beyond said bracket portion.
19. A support in accordance with clause 11, wherein said grommet portion is formed from an elastomeric material.
20. A support in accordance with clause 11, wherein said at least one elongated cable branches from said bundle of second elongated cables beyond said support.

## Claims

1. An integrated cable support (70), said support (70) comprising:
a grommet portion (78,74) for enclosing at least one first elongated cable (82); and
a bracket portion (71) for securing at least one second elongated cable (81) in spaced and substantially fixed relation to said at least one first elongated cable (82);
wherein said at least one first elongated cable (82) and said at least one second elongated cable (81) are in a non-parallel orientation.

2. A support (70) in accordance with claim 1, wherein said cable (81,82) is an electrical cable.

3. A support (70) in accordance with claim 1 or 2, wherein said grommet portion (78,74) includes a securement feature for securing said support (70) to a structure.

4. A support (70) in accordance with any of the preceding claims, wherein said at least one first elongated cable (82) and said at least one second elongated cable (81) are in a perpendicular relationship.

5. A support (70) in accordance with any of the preceding claims, wherein said grommet portion (78,74) substantially encircles said at least one first elongated cable (82).

6. A support (70) in accordance with any of the preceding claims, wherein said bracket portion (71) substantially encircles said at least one second elongated cable (81).

7. A support (70) in accordance with any of the preceding claims, wherein said grommet portion (78,74) includes a central aperture (76) and a slit (79) extending outwardly from said aperture (76) to an outer surface of said grommet portion (78,74).

8. A support (70) in accordance with any of the preceding claims, wherein said grommet portion (78,74) includes at least one extension (78,74) such that said extension (78,74) extends outwardly beyond said bracket portion (71).

9. A support (70) in accordance with any of the preceding claims, wherein said grommet portion (78,74) is formed from an elastomeric material.

10. A support (70) in accordance with any of the preceding claims, wherein said bracket portion (71) encloses cable bundle (80) comprising a plurality of second elongated cables (81) and said at least one elongated cable (82) branches from said cable bundle (80) beyond said support (70).
